# FASCICULE DE BREVET EUROPEEN

(11) **EP 2 618 039 B1**
(45) Date de publication et mention de la délivrance du brevet: **04.03.2015**
(21) Numéro de dépôt: 12198360.5
(22) Date de dépôt: 20.12.2012
(51) Int. Cl.: F17C 13/08

(54) **Elément modulaire de distribution de gaz sous pression et installation correspondante**
Modulelement zur Verteilung von unter Druck stehendem Gas, und entsprechende Anlage
Modular element for dispensing pressurised gas and corresponding facility

(30) Priorité: 17.01.2012 FR 1250452
(43) Date de publication de la demande: 24.07.2013
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Roberge, Guillaume, 38300 Maubec (FR); Verghade, Jean-Marie, 38410 SAINT MARTIN D'URIAGE (FR)
(74) Mandataire: De Cuenca, Emmanuel Jaime

(56) Documents cités:
- WO-A1-2010/107317
- DE-U1- 20 103 682
- DE-U1-202009 010 571
- FR-A1- 2 957 806
- GB-A- 2 007 348
- GB-A- 2 467 170

## Description

La présente invention concerne un élément modulaire de distribution de gaz sous pression ainsi qu'une installation correspondante.

L'invention concerne plus particulièrement un élément modulaire de distribution de gaz sous pression comprenant un carter contenant au moins un réservoir de gaz sous pression, le au moins un réservoir étant muni d'un orifice de sortie raccordé, via un détendeur de pression, à un circuit de distribution de gaz.

L'invention concerne notamment l'acheminement de gaz entre des réservoirs de gaz haute pression (en général des cadres de bouteilles d'hydrogène à 200 ou 700 bar) et une application utilisant ce gaz en basse pression (par exemple une pile à combustible utilisant du gaz à 300 mbar).

Actuellement, les éléments de distribution de gaz connus utilisent des centrales d'inversion assurant le transfert de gaz depuis plusieurs cadres de bouteilles vers l'application.

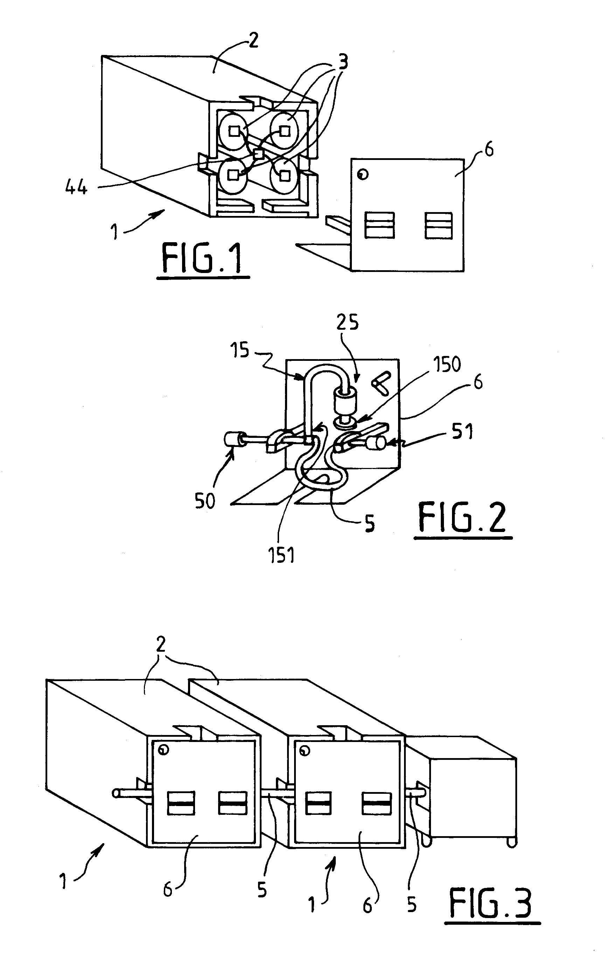

Ainsi, le document GB2007348, considéré comme représentant l'art antérieur le plus proche, divulgue une cage de transport pour bouteilles de gaz munie d'un régulateur, qui, montée côte à côte et raccordée avec des modules du même type (voir figure 2), constitue un élément de distribution.

Ces systèmes connus sont cependant peu adaptés à des sites isolés ne bénéficiant pas d'infrastructure aménagée, c'est-à-dire des sites pour lesquels on ne souhaite pas (installation temporaire, terrain à rendre dans le même état) ou on ne peut pas (trop couteux dans le budget, ou trop long dans le planning) réaliser ces infrastructures.

De plus, les systèmes connus sont relativement complexes à installer et peu adaptables à des configurations de consommation de gaz différentes.

Un but de la présente invention est de pallier tout ou partie des inconvénients de l'art antérieur relevés ci-dessus.

A cette fin, l'élément modulaire selon l'invention, par ailleurs conforme à la définition générique qu'en donne le préambule ci-dessus, est essentiellement caractérisé en ce que l'élément modulaire comprend un couvercle pour le carter, le couvercle fermant sélectivement une face ouverte du carter et formant un support pour une première et une seconde conduites de gaz formant au moins une partie du circuit de distribution de gaz, la première conduite de gaz étant munie d'une première extrémité libre et d'une seconde extrémité libre munies chacune d'un organe de raccordement fluidique, la seconde conduite de gaz étant munie d'une première extrémité libre munie d'un organe de raccordement fluidique raccordé de façon sélectivement amovible à une arrivée de gaz détendu issu du détendeur du au moins un réservoir et une seconde extrémité raccordée à la première conduite, entre les deux extrémités de ladite première conduite.

Un tel élément modulaire est simple à installer avec peu ou pas d'outils.

Cet élément modulaire peut s'adapter à des sites sans aucune infrastructure telle qu'une dalle ou un mur.

La structure d'un tel élément modulaire permet de créer facilement et de manière souple un réseau pour gérer les désalignements des éléments du réseau.

Cet élément permet d'adapter le nombre de réservoirs, variable d'une installation à l'autre et aussi pour la même installation, selon la période de l'année (en fonction par exemple des consommations liées aux variations de température).

Par ailleurs, des modes de réalisation de l'invention peuvent comporter l'une ou plusieurs des caractéristiques suivantes :
- au moins l'une parmi : la première extrémité de la première conduite, la seconde extrémité de la première conduite et la première extrémité de la seconde conduite, est flexible pour permettre un raccordement fluidique selon différentes positions et écartements distincts par rapport au couvercle,
- la première extrémité de la première conduite comprend un organe de raccordement de type à connexion rapide auto-obturant mâle ou, respectivement, femelle, la seconde extrémité de la première conduite comprenant un organe de raccordement de type à connexion rapide auto-obturant femelle ou, respectivement mâle, conjugué de l'organe de raccordement de la première extrémité, pour permettre le raccordement d'une première extrémité de la première conduite d'un premier couvercle avec la seconde extrémité de la première conduite d'un couvercle d'un élément modulaire distinct,
- la seconde extrémité de la première conduite est flexible et est logée dans une gaine de protection rigide montée mobile relativement au couvercle,
- le couvercle comporte une troisième conduite munie d'une première extrémité libre comprenant un organe de raccordement fluidique et une seconde extrémité raccordée fluidiquement entre les première et seconde extrémités de la première conduite,
- l'orifice de sortie du ou des réservoirs est relié à une vanne d'isolement disposée en série avec le détendeur de pression, le détendeur de pression étant conformé pour assurer une détente de pression entre la haute pression du réservoir et un niveau de pression plus bas déterminé fixe ou réglable, de préférence compris entre cinq et vingt-cinq bar,
- la vanne d'isolement et le détendeur de pression sont logé dans un robinet commun à le ou les réservoirs du carter, la sortie basse pression du robinet en aval du détendeur de pression comprenant un organe de raccord fluidique sélectivement raccordé à la première extrémité de la seconde conduite de gaz,
- la seconde conduite de gaz comprend une vanne d'isolation disposée entre ses première et seconde extrémités et un capteur de pression disposé entre la première extrémité de la conduite et ladite vanne d'isolation,
- le couvercle comprend une logique électronique de commande reliée au capteur de pression de la seconde conduite, la logique électronique comprenant également un câble électrique associé à la première extrémité de la seconde conduite et muni d'un détecteur pour détecter l'état connecté ou non de cette première extrémité de la seconde conduite, la logique électronique étant configurée pour réaliser sélectivement un test de fuite dans lequel la vanne d'isolation de la seconde conduite est fermée, la vanne d'isolement associée au(x) réservoir(s) est ouverte et la pression mesurée par le capteur de pression de la seconde conduite est comparée à un seuil déterminé,
- la vanne d'isolation de la seconde conduite est une électrovanne, la logique électronique étant reliée à cette électrovanne via un câble électrique pour assurer la commande sélective de son ouverture ou de sa fermeture,
- l'élément modulaire comprend un capteur de pression mesurant la pression dans le réservoir en amont du détendeur de pression,
- le ou les capteurs de pression sont associés à une logique électronique comprenant un dispositif d'envoie à distance des données de pression mesurées et éventuellement une mémoire stockant ces données,
- la logique électronique comprend au moins un câble électrique supplémentaire ayant une extrémité libre munie d'un connecteur électrique pour une connexion sélective à un organe électronique externe tel qu'une logique électronique d'un autre élément modulaire adjacent,
- le couvercle comprend des avertisseurs visuels et/ou auditifs pour signaler un défaut de fonctionnement tel qu'une fuite détectée par la logique électronique, et/ou pour indiquer à l'utilisateur la nécessité d'effectuer une opération (changement de réservoir par exemple).

L'invention concerne également une installation de pile à combustible comprenant une pile à combustible raccordée à une source de gaz carburant contenant de l'hydrogène, la source de gaz carburant comprenant au moins un élément modulaire de distribution de gaz conforme à l'une quelconque des caractéristiques ci-dessus ou ci-après, dans lequel le au moins un réservoir de gaz sous pression contient du gaz carburant sous pression et la seconde extrémité de la première conduite de gaz est raccordée fluidiquement à une entrée de gaz de la pile à combustible.

Selon une particularité possible, l'installation comprend plusieurs éléments modulaires raccordés en ligne pour alimenter la pile à combustible, la première extrémité de la première conduite d'un premier module étant raccordée à la seconde extrémité de la première conduite d'un second module adjacent de sorte que les réservoirs des modules adjacents sont reliés en parallèle à une ligne l'alimentation commune formée par les premières conduites de gaz reliées.

Une telle installation permet de changer uniquement un cadre de bouteille (un élément modulaire) sans pour autant arrêter la distribution.

Une telle installation permet le cas échéant de changer uniquement deux éléments modulaires empilés sans pour autant arrêter la distribution.

Une telle installation permet de créer un réseau de réservoirs en parallèle qui peuvent être vidés séquentiellement ou simultanément selon les besoins. De même, une telle installation permet de garder un élément modulaire en réserve (qui se vide de son gaz en dernier après d'autres éléments modulaires).

Une telle installation forme un réseau de gaz en bus (c'est-à-dire avec circuiterie partagée), flexible et sécurisé, reliant les sources de gaz au système consommant le gaz.

Ce réseau de distribution de gaz ne nécessite aucune infrastructure mais peut rester sécurisé en terme de restriction d'accès et de niveau de protection, ce qui est utile pour le déploiement d'installation en site isolé ou sur des sites temporaires.

Cette installation en réseau sécurisé peut concerner également des réseaux de communication filaires, des commandes d'actionneurs, ou des capteurs de mesure, entre les sous-ensembles (éléments modulaires) de l'installation.

Selon une particularité possible les éléments modulaires sont posés sur le sol via leur carter respectif et en ce que la première extrémité et/ou la seconde extrémité de la première conduite de chaque élément modulaire est flexible et/ou extensible pour permettre une différence d'orientation, d'inclinaison ou de hauteur entre les éléments (1) modulaires adjacents raccordés fluidiquement.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective, schématique et partielle, d'un exemple de réalisation possible d'un élément modulaire de distribution de gaz selon l'invention en position ouverte,
- la figure 2 représente une vue en perspective, schématique et partielle, d'un détail de la figure 1 illustrant un couvercle de l'élément modulaire,
- la figure 3 représente une vue en perspective, schématique et partielle, d'un exemple d'installation comprenant deux éléments modulaires selon la figure 1 raccordés en ligne à une application consommatrice de gaz,
- la figure 4 illustre de façon schématique et partielle la liaison possible entre deux couvercles d'éléments modulaires adjacents selon un premier exemple de réalisation,
- la figure 5 illustre de façon schématique et partielle la liaison possible entre trois couvercles d'éléments modulaires adjacents selon un troisième exemple de réalisation,
- la figure 6 illustre de façon schématique et partielle la structure interne fluidique d'un couvercle d'élément modulaire selon une réalisation possible,
- la figure 7 illustre de façon schématique et partielle la structure interne fluidique et électrique d'un couvercle d'élément modulaire selon une réalisation possible,
- la figure 8 illustre de façon schématique et partielle la structure fluidique de deux éléments modulaires raccordés à une application consommatrice de gaz selon une réalisation possible,
- la figure 9 illustre de façon schématique et partielle les structures des réseaux de fluide et électrique d'une installation comprenant plusieurs éléments modulaires raccordés à une application consommatrice de gaz selon une réalisation possible.

En se référant à la figure 1, l'élément 1 modulaire de distribution de gaz sous pression comprend un carter 2, par exemple parallélépipédique. Le carter 2 contient au moins un réservoir 3 de gaz sous pression. Dans l'exemple représenté non limitatif il y a quatre réservoirs 3 (bouteilles) de gaz carburant sous pression tel que de l'hydrogène.

Les réservoirs 3 comportent chacun un orifice de sortie (qui peut servir également au remplissage du réservoir) raccordé, via un détendeur 4 de pression commun, à un circuit 15, 5 de distribution de gaz.

C'est-à-dire que le gaz soutiré de chaque réservoir 3 est contrôlé par un robinet/détendeur 44 commun aux réservoirs 3 d'un même carter 2. Bien entendu, en variante, chaque réservoir 3 peut être muni de son propre robinet/détendeur 44. L'élément 1 modulaire comprend en outre un couvercle 6 de fermeture amovible d'au moins une partie d'une face du carter 2. De préférence, le module est posé sur le sol via une face du carter 2 autre que le couvercle 6.

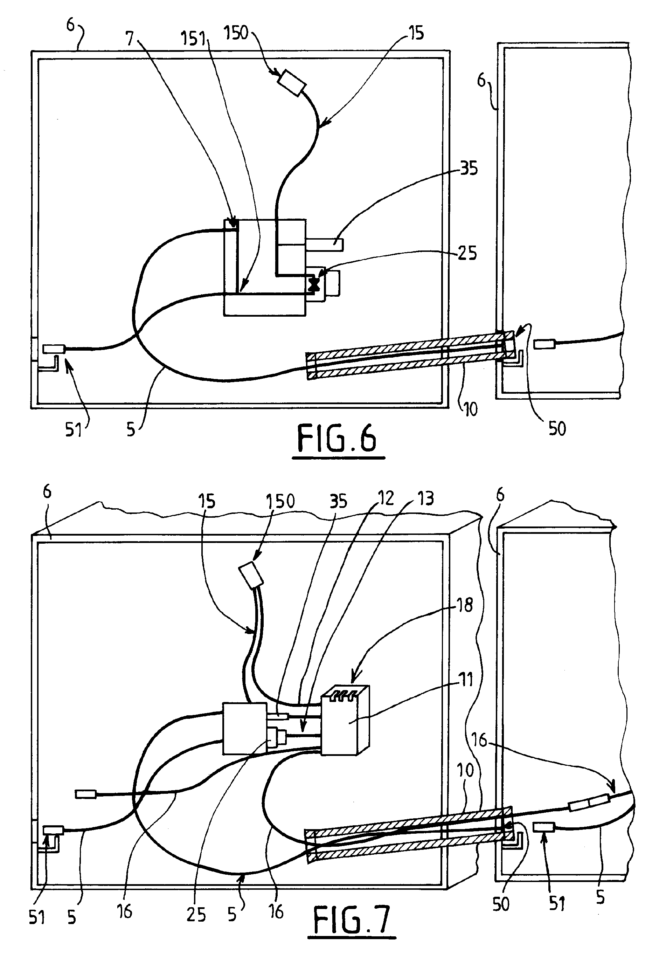

De préférence, le couvercle 6 ferme sélectivement une face d'extrémité du carter parallélépipédique. Par exemple, le couvercle 6 vient se verrouiller sélectivement sur le carter 2 via un système de fermeture mâle/femelle. Comme visible schématiquement et partiellement à la figure 2 ainsi qu'à la figure 6, une face interne du couvercle 6 forme par ailleurs un support mécanique pour un circuit 15, 5 de distribution de gaz sélectivement connectable au(x) réservoir(s) 3 (c'est-à-dire connectable à une sortie de gaz du robinet/détendeur 44).

Le circuit 15, 5 de distribution de gaz comprend une première 5 et une seconde 15 conduites de gaz. La première conduite 5 de gaz est munie d'une première extrémité 51 libre et d'une seconde extrémité 50 libre, ces deux extrémités libres étant munies chacune d'un organe de raccordement fluidique tel qu'un organe de connexion rapide. La seconde conduite 15 de gaz est munie d'une première extrémité 150 libre munie d'un organe de raccordement fluidique raccordé de façon sélectivement amovible à une arrivée de gaz détendu issu du robinet/détendeur 44 des réservoirs 3 du carter 2. La seconde extrémité 151 de la seconde conduite 5 est raccordée entre les deux extrémités 50, 51 de ladite première 5 conduite.

Comme représentée à la figure 2 ainsi qu'à la figure 6, la seconde conduite 15 de gaz peut être munie d'une vanne d'isolation 25. Cette vanne 25 d'isolation peut éventuellement être associée à un détendeur de pression réglable ou non réglable conformé pour assurer une détente de pression déterminée (c'est-à-dire une détente supplémentaire dans le cas où un détendeur 4 est déjà prévu à la sortie des réservoirs 3).

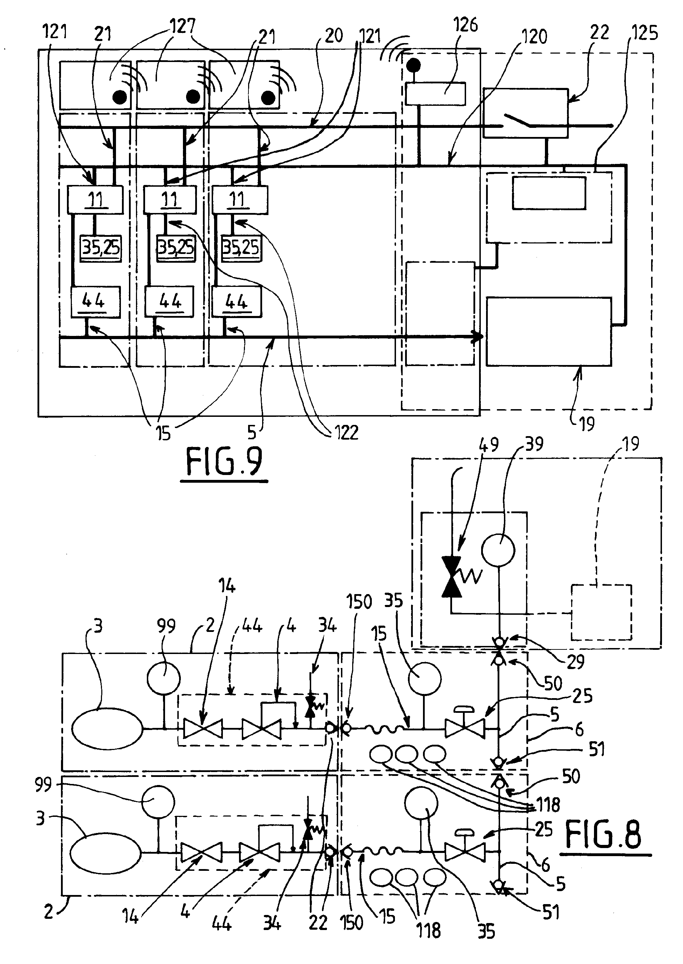

Une telle structure permet de relier en ligne plusieurs éléments 1 modulaires comme représenté à la figure 3 ainsi qu'aux figures 6 et 8.

Comme visible à la figure 6, la seconde extrémité 50 de la première conduite 5 est flexible et peut être logée dans une gaine 10 de protection rigide montée mobile relativement au couvercle.

Au moins l'une parmi : la première extrémité 51 de la première conduite 5, la seconde extrémité 50 de la première conduite 5 et la première extrémité 150 de la seconde 15 conduite, est flexible pour permettre un raccordement fluidique selon différentes positions et écartements distincts par rapport au couvercle 6.

La première extrémité 51 de la première conduite 5 comprend de préférence un organe de raccordement de type à connexion rapide auto-obturant mâle ou, respectivement, femelle, et la seconde extrémité 50 de la première conduite 5 comprend un organe de raccordement de type à connexion rapide auto-obturant femelle ou, respectivement mâle, conjugué de l'organe de raccordement de la première 51 extrémité. Ceci permettre le raccordement d'une première extrémité 51 de la première conduite 5 d'un premier couvercle 6 avec la seconde extrémité 50 de la première conduite 5 d'un couvercle 6 d'un élément 1 modulaire distinct.

La figure 8 illustre schématiquement la liaison en ligne de deux éléments modulaires pour alimenter en gaz une application telle qu'une pile 19 à combustible.

Chaque élément modulaire comprend un carter 2 logeant un ou des réservoirs 3 (un seul réservoir est schématisé dans chaque carter 2 de la figure 8).

A la sortie du ou des réservoirs 3 il est prévu en série : un capteur 99 de pression (facultatif), une vanne d'isolement 14, un détendeur de pression 4, une soupape d'évacuation de sécurité. Ces organes fluidiques sont de préférence intégrés dans un robinet/détendeur 44 muni d'une sortie de gaz détendu raccordable via un raccord 22 fluidique tel qu'un raccord rapide.

Le détendeur 4 de pression est par exemple conformé pour assurer une détente de pression entre la haute pression du réservoir et un niveau de pression plus bas déterminé fixe ou réglable, de préférence compris entre cinq et vingt-cinq bar, par exemple égale à dix bar.

Le raccord 22 est sélectivement connectable à la première extrémité 150 de la seconde conduite 15 du circuit de distribution du couvercle 6 correspondant. De cette façon, la sortie basse pression du robinet (en aval du détendeur 4) se raccorde sélectivement à la première extrémité 150 de la seconde conduite 15 de gaz.

La seconde conduite 15 peut comporter en outre entre ses première 150 et seconde 151 extrémités, un capteur de pression 35 (facultatif) et une vanne 25 d'isolation (facultative) (cf. figures 6 et 8).

La première extrémité 51 de la première conduite 5 d'un premier couvercle est raccordée sélectivement à la seconde extrémité 50 de la première 5 conduites d'un couvercle 6 adjacent. De cette façon, les réservoirs des carters 2 adjacents sont montés en parallèle pour alimenter une application via un raccord 29 d'entrée. Le raccord 29 d'entrée de gaz de l'application est connecté à la seconde extrémité 50 de la première conduite 5 d'un élément 1 modulaires. L'application peut comprendre une pile à combustible 19 située dans un circuit gazeux muni d'une soupape de sécurité 49 et d'un capteur 39 de pression.

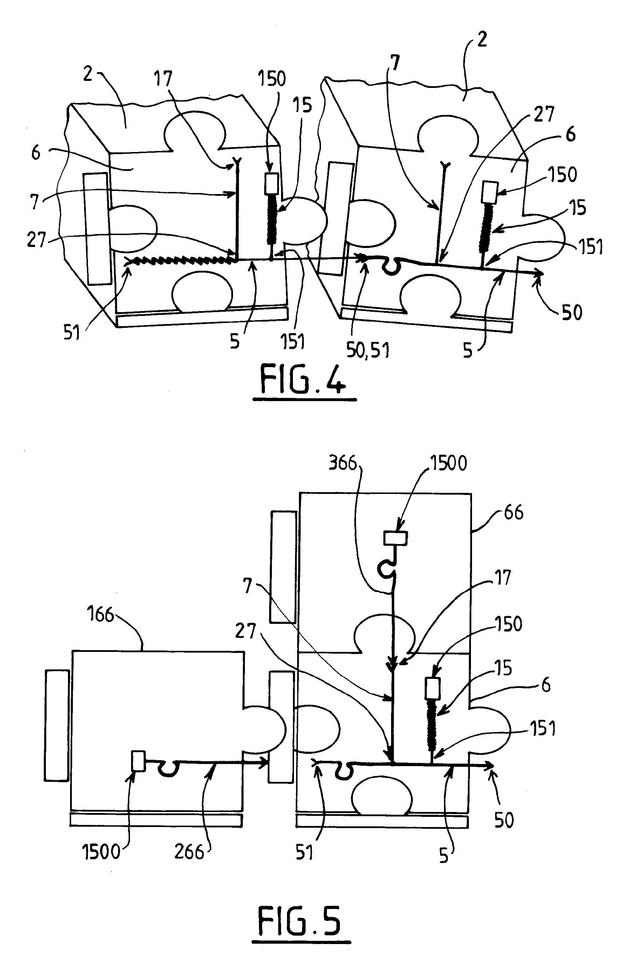

La figure 4 illustre schématiquement un raccordement fluidique entre deux couvercles 6 de carters 2 (par soucis de simplification les carters 2 et leur contenu ne sont pas représentés intégralement à la figure 4). Chaque couvercle 6 comprend, de manière facultative, en plus des premières 5 seconde 15 conduites de gaz, une troisième conduite 7 munie d'une première extrémité 17 libre comprenant un organe de raccordement fluidique et une seconde extrémité 27 raccordée fluidiquement entre les première et seconde extrémités 50, 51 de la première conduite 5 (la figure 6 illustre également troisième conduite 7).

La première extrémité 51 de la première conduite 5 d'un premier couvercle est raccordée sélectivement à la seconde extrémité 50 de la première 5 conduites d'un couvercle 6 adjacent.

Comme représenté à la figure 5, un couvercle 6 peut être associé avec une pièce d'extrémité 166 munie d'une conduite 266 d'extrémité. La conduite 266 d'extrémité est reliée à la première extrémité 51 de la première conduite 5 du couvercle 6 pour obturer cette dernière et donc fermer une extrémité du réseau de gaz ainsi constitué. La conduite 266 d'extrémité possède le cas échéant une extrémité libre avec une pièce de raccordement fluidique 1500.

De même, le couvercle 6 peut être associé avec une pièce 66 supérieure qui est disposée sur le couvercle 6. Cette pièce 66 supérieure est munie d'une conduite 366 d'extrémité qui est reliée à la première extrémité 17 de la troisième conduite 7 du couvercle 6 pour obturer cette dernière (par exemple pour fermer cette extrémité du réseau de gaz ainsi constitué). La conduite 366 d'extrémité possède le cas échéant une extrémité libre avec une pièce de raccordement fluidique 1500.

Les pièces d'extrémité 166 et supérieure 66 peuvent être des carters identiques comprenant un réseau fluidique simplifié par rapport aux autres éléments modulaires décrits précédemment.

L'élément 1 modulaire peut comporter également avantageusement (sans que ce soit nécessaire) une logique 11 électronique de commande comprenant par exemple un micro-processeur et/ou tout autre dispositif approprié.

Comme visible à la figure 7, la logique 11 électronique est reliée au capteur 35 de pression de la seconde conduite 15. La vanne d'isolation 25 de la seconde conduite 15 est de préférence une électrovanne. La logique 11 électronique est reliée à cette électrovanne 25 via un câble électrique 13 pour assurer la commande sélective de son ouverture ou de sa fermeture.

La logique électronique 11 comprend en outre un ou deux câbles 16 munis chacun d'une extrémité libre munie d'un connecteur électrique pour une connexion sélective à un organe électronique externe tel qu'une logique électronique d'un autre élément 2 modulaire adjacent (en vue d'un transfert de données et/ou pour l'alimentation électrique).

La logique 11 électronique peut comprendre en outre un câble 12 électrique associé à la première extrémité 150 de la seconde 15 conduite et muni d'un détecteur pour détecter l'état connecté ou non de cette première extrémité 150 de la seconde 15 conduite (cf. figure 7). La logique 11 peut également comprendre un câble pour l'alimentation et/ou le pilotage d'un électroaimant situé dans la première extrémité 150, cet électro-aimant pilotant par exemple la vanne 14 d'isolement d'un réservoir 3 de gaz auquel la première extrémité 150 est connectée.

La logique 11 électronique peut être configurée (programmée) pour réaliser sélectivement un test de fuite dans lequel la vanne 25 d'isolation de la seconde conduite 15 est fermée tandis que la vanne d'isolement 14 associée au(x) réservoir(s) 3 est ouverte puis fermée une fois que la ligne de gaz à tester est suffisamment gonflée.

La pression mesurée par le capteur 35 de pression de la seconde conduite 15 est alors comparée à un seuil déterminé de la première extrémité 51 du couvercle 6. Ce test permet de détecter une éventuelle anomalie et notamment une fuite si la pression en amont de la vanne 25 d'isolation de la seconde conduite 15 est anormalement basse.

En effet, l'ouverture de la vanne 14 d'isolement côté réservoirs 3 et la fermeture simultanée de la vanne 25 d'isolation de la seconde conduite 15 fait normalement monter la pression lue par le capteur 35 situé sur la seconde 15 conduite. Une temporisation peut être prévue pour surveiller cette pression et également le cas échéant la variation de cette pression mesurée. En fin de temporisation, si la pression est inférieure à un seuil déterminé (fonction d'un débit de fuite maximum autorisé), une fuite est détectée. Dans le cas contraire il n'y a pas de fuite.

Pendant cette temporisation si la variation de pression mesurée est supérieure à un seuil haut la fuite peut être jugée trop importante et le test peut être arrêté. De même, pendant cette temporisation si la pression mesurée est trop basse une fuite est détectée.

A la fin du test de fuite la vanne 14 d'isolement côté réservoirs 3 est déjà refermée et la vanne 25 d'isolation de la seconde conduite 15 peut être ouverte.

Selon le résultat du test de fuite, soit le cadre est disponible et en attente d'utilisation, soit le cadre est indisponible car défaillant, et mis en attente d'une intervention de l'opérateur qui peut déconnecter la tête du robinet/détendeur 44, vérifier l'état des raccords, et reconnecter les raccord pour redémarrer un nouveau test de fuite.

La vanne 14 d'isolement côté réservoirs 3 ne peut s'ouvrir de préférence que :
- lors d'un test de fuite automatique, pour gonfler la ligne à tester comme décrit ci-dessus
- lors d'un fonctionnement normal en soutirage.

Le robinet/détendeur 44 peut être considéré défaillant par exemple si la pression aval du détendeur 4 est supérieure à un seuil déterminé, par exemple quinze bar et seulement quand la vanne 14 d'isolement amont est ouverte.

Le couvercle 6 peut comprendre des avertisseurs 118 visuels et/ou auditifs pour signaler un défaut de fonctionnement tel qu'une fuite détectée par la logique 11 électronique.

La figure 9 illustre schématiquement une architecture électrique possible pour l'installation comprenant trois modules élémentaires reliés en ligne. Chaque module est schématisé par son ensemble robinet/détendeur 4, 14 respectif, sa seconde conduite 15 de gaz et sa première conduite 5 de gaz respectives. Les premières conduites 5 de gaz des trois modules élémentaire sont reliées fluidiquement en lignes. Les robinets/détendeurs 4, 14 (et donc les réservoirs correspondants non représentés par soucis de simplification à la figure 9) sont donc reliés en parallèle à conduite de gaz formée par les premières conduites 5 de gaz. Cette ligne 5 de gaz alimente sélectivement une pile à combustible 19.

La pile à combustible 19 produit de l'électricité pour une application. Une partie de cette électricité peut alimenter en retour la partie électronique de l'installation. Par exemple, une circuiterie 20, 21 relie, via un interrupteur 22, la pile à combustible 19 aux logiques 11 électroniques des modules 1 élémentaires pour commander les capteurs ou vannes 25, 35. De même, une autre circuiterie 120, 121, 122 de communication peut relier un contrôleur 125 à chacune des logiques 11 électroniques, aux capteurs et aux vannes 25, 35 ainsi qu'aux robinets/détendeurs 4, 14. Comme illustré à la figure 9, cette circuiterie de communication 120 peut être reliée également à la pile à combustible 19. Tout ou partie des informations peuvent être transmises à distances via un émetteur 126 sans fil (le cas échéant cet émetteur assure également une fonction de réception de données). Alternativement ou cumulativement, l'émetteur 126 récupère les informations de capteurs 127 communiquant à distance.

Cette configuration permet des liaisons fluidiques et électriques sécurisées entre les divers éléments de l'installation, sans nécessiter d'infrastructure, ni de protection extérieure supplémentaire particulière.

Le cas échéant, des capteurs 127 intelligents communicant à distance peuvent être prévus pour chacun des ensembles de réservoirs 3 de chaque élément modulaire. Les capteurs 127 peuvent communiquer avec le récepteur 126 et/ ou directement avec l'électronique 11. Par exemple tel capteur de pression peut être du type de celui décrit dans le document EP1988327 ou FR2868160.

L'installation permet de construire un système de distribution de gaz à un ou plusieurs éléments modulaires. Cette architecture permet de s'adapter aux besoins en gaz de manière flexible. De plus, la configuration des éléments modulaires permet de prévoir des différences d'alignement et de niveau entre chacun des éléments.

Les éléments modulaires permettent une combinaison à volonté et une utilisation réversible d'un côté ou de l'autre (gauche ou droite).

De préférence, chaque élément modulaire comprend un accès sécurisé (par exemple via une vitre à briser) vers une vanne de coupure.

## Revendications

1. Elément modulaire de distribution de gaz sous pression comprenant un carter (2) contenant au moins un réservoir (3) de gaz sous pression, le au moins un réservoir (3) étant muni d'un orifice de sortie raccordé, via un détendeur (4) de pression, à un circuit (15, 5) de distribution de gaz, **caractérisé en ce que** l'élément (1) modulaire comprend un couvercle (6) pour le carter (2), le couvercle (6) fermant sélectivement une face ouverte du carter (2) et formant un support pour une première (5) et une seconde (15) conduites de gaz formant au moins une partie du circuit (15, 5) de distribution de gaz, la première conduite (5) de gaz étant munie d'une première extrémité (51) libre et d'une seconde extrémité (50) libre munies chacune d'un organe de raccordement fluidique, la seconde conduite (15) de gaz étant munie d'une première extrémité (150) libre munie d'un organe de raccordement fluidique raccordé de façon sélectivement amovible à une arrivée de gaz détendu issu du détendeur (4) du au moins un réservoir (3) et une seconde extrémité (151) raccordée à la première (5) conduite, entre les deux extrémités (50, 51) de ladite première (5) conduite.

2. Elément selon la revendication 1 **caractérisé en ce qu'**au moins l'une parmi : la première extrémité (51) de la première conduite (5), la seconde extrémité (50) de la première conduite (5) et la première extrémité (150) de la seconde (15) conduite, est flexible pour permettre un raccordement fluidique selon différentes positions et écartements distincts par rapport au couvercle (6).

3. Elément selon la revendication 1 ou 2 **caractérisé en ce que** la première extrémité (51) de la première conduite (5) comprend un organe de raccordement de type à connexion rapide auto-obturant mâle ou, respectivement, femelle, et **en ce que** la seconde extrémité (50) de la première conduite (5) comprend un organe de raccordement de type à connexion rapide auto-obturant femelle ou, respectivement mâle, conjugué de l'organe de raccordement de la première (51) extrémité, pour permettre le raccordement d'une première extrémité (51) de la première conduite (5) d'un premier couvercle (6) avec la seconde extrémité (50) de la première conduite (5) d'un couvercle (6) d'un élément (1) modulaire distinct.

4. Elément selon l'une quelconque des revendications 1 à 3 **caractérisé en ce que** la seconde extrémité (50) de la première conduite (5) est flexible et est logée dans une gaine (10) de protection rigide montée mobile relativement au couvercle (6).

5. Elément selon l'une quelconque des revendications 1 à 4, **caractérisé en ce que** le couvercle (6) comporte une troisième conduite (7) munie d'une première extrémité (17) libre comprenant un organe de raccordement fluidique et une seconde extrémité (27) raccordée fluidiquement entre les première et seconde extrémités (50, 51) de la première conduite (5).

6. Elément selon l'une quelconque des revendications 1 à 5, **caractérisé en ce que** l'orifice de sortie du ou des réservoirs (3) est relié à une vanne d'isolement (14) disposée en série avec le détendeur (4) de pression, le détendeur (4) de pression étant conformé pour assurer une détente de pression entre la haute pression du réservoir et un niveau de pression plus bas déterminé fixe ou réglable, de préférence compris entre cinq et vingt-cinq bar.

7. Elément selon la revendication 6, **caractérisé en ce que** la vanne d'isolement (14) et le détendeur (4) de pression sont logé dans un robinet commun à le ou les réservoirs (3) du carter (2), la sortie basse pression du robinet en aval du détendeur (4) de pression comprenant un organe de raccord (22) fluidique sélectivement raccordé à la première extrémité (150) de la seconde conduite (15) de gaz.

8. Elément selon l'une quelconque des revendications 1 à 7, **caractérisé en ce que** la seconde conduite (15) de gaz comprend une vanne d'isolation (25) disposée entre ses première (150) et seconde (151) extrémités et un capteur (35) de pression disposé entre la première (150) extrémité de la conduite (15) et ladite vanne d'isolation (25).

9. Elément selon la revendication 8, **caractérisé en ce que** le couvercle (6) comprend une logique (11) électronique de commande reliée au capteur (35) de pression de la seconde conduite (15), la logique (11) électronique comprenant également un câble (12) électrique associé à la première extrémité (150) de la seconde (15) conduite et muni d'un détecteur pour détecter l'état connecté ou non de cette première extrémité (150) de la seconde (15) conduite, la logique (11) électronique étant configurée pour réaliser sélectivement un test de fuite dans lequel la vanne (25) d'isolation de la seconde conduite (15) est fermée, la vanne d'isolement (14) associée au(x) réservoir(s) (3) est ouverte et la pression mesurée par le capteur (35) de pression de la seconde conduite (15) est comparée à un seuil déterminé.

10. Elément selon la revendication 9, **caractérisé en ce que** la vanne d'isolation (25) de la seconde conduite (15) est une électrovanne et **en ce que** la logique (11) électronique est reliée à cette électrovanne (25) via un câble électrique (13) pour assurer la commande sélective de son ouverture ou de sa fermeture.

11. Installation de pile à combustible comprenant une pile à combustible (19) raccordée à une source de gaz carburant contenant de l'hydrogène, **caractérisée en ce que** la source de gaz carburant comprend au moins un élément (1) modulaire de distribution de gaz conforme à l'une quelconque des revendications 1 à 10, dans lequel le au moins un réservoir (3) de gaz sous pression contient du gaz carburant sous pression et la seconde extrémité (50) de la première conduite (5) de gaz est raccordée fluidiquement à une entrée (29) de gaz de la pile (19) à combustible.

12. Installation selon la revendication 11, **caractérisée en ce qu'**elle comprend plusieurs éléments (1) modulaires raccordés en ligne pour alimenter la pile (19) à combustible, la première extrémité (51) de la première conduite (5) d'un premier module (1) étant raccordée à la seconde extrémité (50) de la première conduite (5) d'un second module (1) adjacent de sorte que les réservoirs (3) des modules (1) adjacents sont reliés en parallèle à une ligne l'alimentation commune formée par les premières (5) conduites de gaz reliées.

13. Installation selon la revendication 12, **caractérisée en ce que** les éléments (1) modulaires sont posés sur le sol via leur carter (2) respectif et **en ce que** la première extrémité (51) et/ou la seconde extrémité (50) de la première conduite (5) de chaque élément (1) modulaire est flexible et/ou extensible pour permettre une différence d'orientation, d'inclinaison ou de hauteur entre les éléments (1) modulaires adjacents raccordés fluidiquement.

## Patentansprüche

1. Modulares Element zum Verteilen von unter Druck stehendem Gas, umfassend ein Gehäuse (2), das mindestens einen Druckgasbehälter (3) umfasst, wobei der mindestens eine Behälter (3) mit einer Austrittsöffnung versehen ist, die über ein Druckminderventil (4) mit einem Gasverteilerkreis (15, 5) verbunden ist, **dadurch gekennzeichnet, dass** das modulare Element (1) einen Deckel (6) für das Gehäuse (2) umfasst, wobei der Deckel (6) selektiv eine offene Seite des Gehäuses (2) verschließt und einen Träger bildet für eine erste (5) und eine zweite Gasleitung (15), die mindestens einen Teil des Gasverteilerkreises (15, 5) bilden, wobei die erste Gasleitung (5) mit einem ersten freien Ende (51) und einem zweiten freien Ende (50) versehen ist, die jeweils mit einem Verbindungsorgan für Fluide versehen sind, wobei die zweite Gasleitung (15) mit einem ersten freien Ende (150) versehen ist, das mit einem Verbindungsorgan für Fluide versehen ist, das zwischen den zwei Enden (50, 51) der ersten Leitung (5) selektiv entfernbar verbunden ist mit einem Einlass für entspanntes Gas, das aus dem Druckminderventil (4) des mindestens einen Behälters (3) stammt, und einem zweiten Ende (151), das mit der ersten Leitung (5) verbunden ist.

2. Element nach Anspruch 1, **dadurch gekennzeichnet, dass** mindestens eines der Folgenden: das erste Ende (51) der ersten Leitung (5), das zweite Ende (50) der ersten Leitung (5) und das erste Ende (150) der zweiten Leitung (15) flexibel ist, um eine Fluidverbindung entsprechend verschiedenen Positionen und Abständen relativ zu dem Deckel (6) zu gestatten.

3. Element nach Anspruch 1 oder 2, **dadurch gekennzeichnet, dass** das erste Ende (51) der ersten Leitung (5) ein Verbindungsorgan des Typs mit steckerförmiger bzw. buchsenförmiger selbstschließender Schnellverbindung umfasst und dass das zweite Ende (50) der ersten Leitung (5) ein Verbindungsorgan des Typs mit buchsenförmiger bzw. steckerförmiger selbstschließender Schnellverbindung umfasst, das an das Verbindungsorgan des ersten Endes (51) angepasst ist, um die Verbindung eines ersten Endes (51) der ersten Leitung (5) eines ersten Deckels (6) mit dem zweiten Ende (50) der ersten Leitung (5) eines Deckels (6) eines anderen modularen Elements (1) zu gestatten.

4. Element nach einem der Ansprüche 1 bis 3, **dadurch gekennzeichnet, dass** das zweite Ende (50) der ersten Leitung (5) flexibel ist und in einer starren Schutzhülle (10) angeordnet ist, die relativ zu dem Deckel (6) beweglich gelagert ist.

5. Element nach einem der Ansprüche 1 bis 4, **dadurch gekennzeichnet, dass** der Deckel (6) eine dritte Leitung (7) aufweist, die mit einem ersten freien Ende (17) versehen ist, das ein Verbindungsorgan für Fluide umfasst, und einem zweiten Ende (27), das zwischen dem ersten und zweiten Ende (50, 51) der ersten Leitung (5) fluidisch verbunden ist.

6. Element nach einem der Ansprüche 1 bis 5, **dadurch gekennzeichnet, dass** eine Austrittsöffnung an dem oder den Behältern (3) mit einem Absperrventil (14) verbunden ist, das in Reihe mit dem Druckminderventil (4) angeordnet ist, wobei das Druckminderventil (4) ausgebildet ist, um eine Druckminderung zu bewirken zwischen dem hohen Druck des Behälters und einem niedrigeren Druckniveau, das fest oder regelbar, vorzugsweise zwischen fünf und fünfundzwanzig bar, festgelegt ist.

7. Element nach Anspruch 6, **dadurch gekennzeichnet, dass** das Absperrventil (14) und das Druckminderventil (4) in einem Hahn angeordnet sind, der dem oder den Behältern (3) des Gehäuses (2) gemeinsam ist, wobei der Niederdruckausgang des Hahns stromabwärts des Druckminderventils (4) ein Verbindungsorgan für Fluide (22) umfasst, das selektiv mit dem ersten Ende (150) der zweiten Gasleitung (15) verbunden ist.

8. Element nach einem der Ansprüche 1 bis 7, **dadurch gekennzeichnet, dass** die zweite Gasleitung (15) ein Absperrventil (25) umfasst, das zwischen ihrem ersten (150) und zweiten (151) Ende angeordnet ist, und einen Druckgeber (35) umfasst, der zwischen dem ersten Ende (150) der Leitung (15) und dem Absperrventil (25) angeordnet ist.

9. Element nach Anspruch 8, **dadurch gekennzeichnet, dass** der Deckel (6) eine elektronische Steuerlogik (11) umfasst, die mit dem Druckgeber (35) der zweiten Leitung (15) verbunden ist, wobei die elektronische Logik (11) ferner ein elektrisches Kabel (12) umfasst, das dem ersten Ende (150) der zweiten Leitung (15) zugehörig und mit einem Detektor versehen ist, um den angeschlossenen oder nicht angeschlossenen Zustand dieses ersten Endes (150) der zweiten Leitung (15) zu detektieren, wobei die elektronische Logik (11) ausgelegt ist, um selektiv einen Leckagetest durchzuführen, in dem das Absperrventil (25) der zweiten Leitung (15) geschlossen ist, das Absperrventil (14), das dem bzw. den Behälter(n) (3) zugehörig ist, offen ist und der durch den Druckgeber (35) der zweiten Leitung (15) gemessene Druck mit einem bestimmten Schwellenwert verglichen wird.

10. Element nach Anspruch 9, **dadurch gekennzeichnet, dass** das Absperrventil (25) der zweiten Leitung (15) ein Magnetventil ist und dass die elektronische Logik (11) mit diesem Magnetventil (25) über ein elektrisches Kabel (13) verbunden ist, um die selektive Steuerung seiner Öffnung oder seiner Schließung zu bewirken.

11. Brennstoffzellenanlage umfassend eine Brennstoffzelle (19), die mit einer Treibstoffgasquelle verbunden ist, die Wasserstoff enthält, **dadurch gekennzeichnet, dass** die Treibstoffgasquelle mindestens ein modulares Element (1) zum Verteilen von Gas nach einem der Ansprüche 1 bis 10 umfasst, wobei der mindestens eine Druckgasbehälter (3) unter Druck stehendes Treibstoffgas enthält und das zweite Ende (50) der ersten Gasleitung (5) mit einem Gaseintritt (29) der Brennstoffzelle (19) fluidisch verbunden ist.

12. Anlage nach Anspruch 11, **dadurch gekennzeichnet, dass** sie mehrere modulare Elemente (1) umfasst, die in Reihe verbunden sind, um die Brennstoffzelle (19) zu versorgen, wobei das erste Ende (51) der ersten Leitung (5) eines ersten Moduls (1) mit dem zweiten Ende (50) der ersten Leitung (5) eines benachbarten zweiten Moduls (1) verbunden ist, so dass die Behälter (3) der benachbarten Module (1) parallel mit einer gemeinsamen Versorgungsleitung verbunden sind, die durch die verbundenen ersten Gasleitungen (5) gebildet ist.

13. Anlage nach Anspruch 12, **dadurch gekennzeichnet, dass** die modularen Elemente (1) über ihr jeweiliges Gehäuse (2) auf dem Boden stehen und dass das erste Ende (51) und/oder das zweite Ende (50) der ersten Leitung (5) jedes modularen Elements (1) flexibel und/oder dehnbar sind, um einen Unterschied in der Ausrichtung, der Neigung oder der Höhe zwischen den fluidisch verbundenen benachbarten modularen Elementen (1) zu gestatten.

## Claims

1. Modular element for distributing pressurised gas, comprising a housing (2) containing at least one pressurised gas tank (3), the at least one tank (3) being provided with an outlet orifice connected, via a pressure reducing valve (4), to a gas distribution circuit (15, 5), **characterised in that** the modular element (1) comprises a cover (6) for the housing (2), the cover (6) selectively closing an open face of the housing (2) and forming a support for a first (5) and a second (15) gas pipe forming at least part of the gas distribution circuit (15, 5), the first gas pipe (5) being provided with a first free end (51) and a second free end (50) each provided with a fluid connection member, the second gas pipe (15) being provided with a first free end (150) provided with a fluid connection member connected, in a selectively detachable manner, to an inlet for depressurised gas coming from the pressure reducing valve (4) of the at least one tank (3) and a second end (151) connected to the first pipe (5), between the two ends (50, 51) of the first pipe (5).

2. Element according to claim 1, **characterised in that** at least one among the first end (51) of the first pipe (5), the second end (50) of the first pipe (5) and the first end (150) of the second pipe (15) is flexible to allow fluid connection in different positions and at distinct spacings relative to the cover (6).

3. Element according to either claim 1 or claim 2, **characterised in that** the first end (51) of the first pipe (5) comprises a male or, respectively, female self-sealing quick-connection member, and **in that** the second end (50) of the first pipe (5) comprises a female or, respectively, male self-sealing quick-connection member, mating with the connection member of the first end (51), to allow the connection of a first end (51) of the first pipe (5) of a first cover (6) to the second end (50) of the first pipe (5) of a cover (6) of a distinct modular element (1).

4. Element according to any one of claims 1 to 3, **characterised in that** the second end (50) of the first pipe (5) is flexible and is housed in a rigid protective sheath (10) that is mounted in a mobile manner relative to the cover (6).

5. Element according to any one of claims 1 to 4, **characterised in that** the cover (6) comprises a third pipe (7) provided with a first free end (17) comprising a fluid connection member and a second end (27) fluidly connected between the first and second ends (50, 51) of the first pipe (5).

6. Element according to any one of claims 1 to 5, **characterised in that** the outlet orifice of the tank(s) (3) is linked to an isolating valve (14) disposed in series with the pressure reducing valve (4), the pressure reducing valve (4) being designed so as to ensure a pressure drop between the high pressure of the tank and a predetermined fixed or adjustable lower pressure, preferably between five and twenty-five bar.

7. Element according to claim 6, **characterised in that** the isolating valve (14) and the pressure reducing valve (4) are housed in a tap common to the tank(s) (3) of the housing (2), the low pressure outlet of the tap downstream of the pressure reducing valve (4) comprising a fluid connection member (22) selectively connected to the first end (150) of the second gas pipe (15).

8. Element according to any one of claims 1 to 7, **characterised in that** the second gas pipe (15) comprises an isolating valve (25) disposed between its first (150) and second (151) ends and a pressure sensor (35) disposed between the first end (150) of the pipe (15) and the isolating valve (25).

9. Element according to claim 8, **characterised in that** the cover (6) comprises an electronic control logic (11) linked to the pressure sensor (35) of the second pipe (15), the electronic logic (11) further comprising an electric cable (12) associated with the first end (150) of the second pipe (15) and provided with a detector for detecting the connected or unconnected state of the first end (150) of the second pipe (15), the electronic logic (11) being configured to selectively perform a leak test in which the isolating valve (25) of the second pipe (15) is closed, the isolating valve (14) associated with the tank(s) (3) is opened and the pressure measured by the pressure sensor (35) of the second pipe (15) is compared to a predetermined threshold.

10. Element according to claim 9, **characterised in that** the isolating valve (25) of the second pipe (15) is a solenoid valve and **in that** the electronic logic (11) is linked to said solenoid valve (25) via an electric cable (13) to ensure the selective control of its opening or closing.

11. Fuel cell installation comprising a fuel cell (19) connected to a gas fuel source containing hydrogen, **characterised in that** the gas fuel source comprises at least one modular element (1) for distributing gas according to any one of claims 1 to 10, wherein the at least one pressurised gas tank (3) contains pressurised gas fuel and the second end (50) of the first gas pipe (5) is fluidly connected to a gas inlet (29) of the fuel cell (19).

12. Installation according to claim 11, **characterised in that** it comprises a plurality of modular elements (1) connected in line to supply the fuel cell (19), the first end (51) of the first pipe (5) of a first module (1) being connected to the second end (50) of the first pipe (5) of a second adjacent module (1) so that the tanks (3) of the adjacent modules (1) are linked in parallel with a shared supply line formed by the first connected gas pipes (5).

13. Installation according to claim 12, **characterised in that** the modular elements (1) are placed on the ground via their respective housing (2), and **in that** the first end (51) and/or the second end (50) of the first pipe (5) of each modular element (1) is flexible and/or extendable to allow a difference in orientation, incline or height between the fluidly connected adjacent modular elements (1).
